# EUROPÄISCHE PATENTSCHRIFT

(11) **EP 2 616 328 B1**
(45) Veröffentlichungstag und Bekanntmachung des Hinweises auf die Patenterteilung: **26.08.2015**
(21) Anmeldenummer: 11758194.2
(22) Anmeldetag: 15.09.2011
(51) Int. Cl.: B63H 9/02

(54) **MAGNUS-ROTOR MIT FÜHRUNGSROLLENABDECKUNG**
MAGNUS ROTOR COMPRISING A GUIDE ROLLER COVER
ROTOR À EFFET MAGNUS POURVU D'UNE STRUCTURE DE RECOUVREMENT DE CYLINDRE DE GUIDAGE

(30) Priorität: 16.09.2010 DE 102010040919
(43) Veröffentlichungstag der Anmeldung: 24.07.2013
(73) Patentinhaber: Wobben Properties GmbH, 26605 Aurich (DE)
(72) Erfinder: ROHDEN, Rolf, 26607 Aurich (DE)
(74) Vertreter: Eisenführ Speiser
(86) Internationale Anmeldenummer: PCT/EP2011/065984
(87) Internationale Veröffentlichungsnummer: WO 2012/035090

(56) Entgegenhaltungen:
- CH-A- 116 268
- DE-A1-102006 025 732
- US-A- 4 602 584

## Beschreibung

Die vorliegende Erfindung betrifft einen Magnus-Rotor mit einer Führungsrollenabdeckung.

Magnus-Rotoren werden auch als Flettner-Rotoren oder Segel-Rotoren bezeichnet.

Magnus-Rotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Flettner-Rotor oder Magnus-Rotor beschrieben.

Aus der CH 116268 ist ein Magnus-Rotor mit einer Führung mit mehreren Führungsrädern bekannt. Die Führungsrollen können innerhalb des Magnus-Rotors angeordnet sein und diesen von Innen stützen oder auch außerhalb, um den Magnus-Rotor von Außen zu stützen. Als Führungsrollen werden elastische Reifen wie die Räder von Kraftfahrzeugen verwendet.

Aus der WO 2006/133950 A2 ist ein Magnus-Rotor mit wenigstens drei Führungsrollen bekannt, die am unteren Außenumfang des Magnus-Rotors angeordnet sind und spielfrei an diesem anliegen. Die Führungsrollen sind mit einer segmentierten Abdeckung abgedeckt.

DE 10 2006 025 732 A1 beschreibt einen Magnus-Rotor gemäss dem Oberbegriff des Anspruchs 1.

Allen zuvor beschriebenen Abdeckungen für die Führungsrollen eines Magnus-Rotors ist dabei gemeinsam, dass diese die Führungsrollen abdecken, um diese vor Verschmutzungen und Beschädigungen zu schützen sowie um Personen oder Gegenstände davor zu bewahren, mit den Führungsrollen in Kontakt zu kommen und dadurch, gerade bei einem rotierenden Magnus-Rotor, verletzt bzw. beschädigt zu werden. Dabei müssen diese Abdeckungen entfernt werden, um Zugang zu den darunter geschützten Führungsrollen zu erhalten, falls diese ausgetauscht oder gewartet werden müssen.

Hierbei stellt es einen nicht unerheblichen Aufwand dar, sich Zugang zu den Führungsrollen unter den Abdeckungen zu verschaffen und die Wartung und den Austausch von Führungsrollen durch Personal vorzunehmen.

Der Erfindung liegt daher die Aufgabe zugrunde, eine einfachere Möglichkeit zu schaffen, sich für Wartung und Austausch der Führungsrollen Zugang zu diesen zu verschaffen.

Erfindungsgemäß wird diese Aufgabe durch einen Magnus-Rotor mit den Merkmalen nach Anspruch 1 gelöst. Vorteilhafte Weiterbildungen sind in den Unteransprüchen beschrieben.

Somit wird ein Magnus-Rotor mit einem Träger beschrieben, welcher im Inneren des Magnus-Rotors angeordnet ist. Der Magnus-Rotor weist einen Rotor auf, welcher im Betrieb des Magnus-Rotors um den Träger rotiert. Eine Lagerung trägt den Rotor auf dem Träger. Der Magnus-Rotor weist unterhalb seiner Führungsrollen jeweils eine Trittfläche auf, die bei Hochklappen der Abdeckung ebenfalls abgedeckt und geschützt wird. Im heruntergeklappten Zustand gibt die Abdeckung sowohl die Führungsrolle, an der gearbeitet werden soll, als auch deren Trittfläche frei, so dass diese zum Arbeiten betreten bzw. genutzt werden kann und das Personal von dieser Trittfläche aus sicher die Wartung oder den Austausch vornehmen kann.

Ein Vorteil dieser Trittfläche besteht darin, dass auf diese Weise die Notwendigkeit vermieden wird, dass sich das Personal für Wartungs- oder Austauscharbeiten über eine Leiter oder Arbeitsbühne Zugang zu der entsprechenden Führungsrolle verschaffen muss. Diese Leiter oder Arbeitsbühne wäre, gerade auf dem Deck eines Schiffes, nur mit größerem Aufwand gegen ein Verrutschen oder Verfahren zu sichern. Ferner kann bei einem durch Regen und Gischt stets feuchten Schiffsdeck die Rutschgefahr nie vollkommen beseitigt werden, die auch das Verrutschen von z.B. Leitern oder Arbeitsbühnen bewirkt. So stellen Leitern, Arbeitsbühnen und ähnliche Hilfsmittel zum Erreichen einer Führungsrolle stets eine Gefahrenquelle für das Personal dar, die erfindungsgemäß durch die unterhalb oder neben der Führungsrolle vorgesehene Trittfläche vermieden werden kann. Auch kann neben einer heruntergeklappten Abdeckung kein oder kaum Platz sein, um hier eine Leiter oder Arbeitsbühne zu positionieren oder zumindest so, dass von dieser aus ein Zugang zu der Führungsrolle möglich ist, um die Arbeiten durchführen zu können. Ferner stellt das Aufstellen und Wegräumen einer Leiter oder einer Arbeitsbühne einen zusätzlichen Aufwand dar, der durch das Vorsehen einer integrierten Trittfläche vermieden werden kann. Somit wird durch das Vorsehen der erfindungsgemäßen Trittfläche unter der Führungsrolle das Arbeiten an dieser nicht nur sicherer, sondern auch einfacher und zeitsparender durchführbar.

Gemäß einem Aspekt der Erfindung ist die Trittfläche als Teil einer Grundplatte oder eines Schiffsdecks oder dergleichen ausgebildet, auf der der Magnus-Rotor befestigt ist. Hierdurch wird sichergestellt, dass die Trittfläche sich nicht gegenüber dem Schiffsdeck relativ bewegen kann, da sie als Teil des Schiffsdecks ausgebildet ist, d.h. ein Teil des Schiffsdecks oder auch des Fußes oder Unterbaus des Magnus-Rotors ist.

Gemäß einem weiteren Aspekt der Erfindung ist die Trittfläche mit einer Oberfläche versehen oder die Oberfläche beschichtet, um ein Rutschen auf der Trittfläche zu verhindern. Dies ist vorteilhaft, um die Rutschgefahr bei Betreten der Trittfläche oder Stehen auf der Trittfläche zu reduzieren, da gerade bei Arbeiten auf einem Schiffsdeck durch ein Stolpern oder Hinfallen das Personal stark gefährdet ist, z.B. durch ein Über-Bord-Fallen.

Gemäß einem Aspekt der Erfindung weist die Abdeckung eine Bewegungsvorrichtung auf, die dazu ausgestaltet ist, die Abdeckung in dem geöffneten Zustand in einer vertikalen Höhe oberhalb der Trittfläche zu halten. Durch diese Bewegungsvorrichtung wird einerseits das Hoch- und Herunterklappen der Abdeckung bzw. jedes Abdeckungssegments ermöglicht. Zum anderen wird hierdurch ein vollkommenes Herunterklappen oder auch Herunterfallen des Abdeckungssegments auf den Untergrund oder das Schiffsdeck verhindert, da durch die Bewegungsvorrichtung das Abdeckungssegment in einer bestimmten Höhe über dem Untergrund oder Schiffsdeck gehalten werden kann. Dabei ist es vorteilhaft, diese bestimmte Höhe so zu wählen, dass das Abdeckungssegment zumindest teilweise oberhalb der Trittfläche positioniert wird. Hierdurch kann durch das heruntergeklappte Abdeckungssegment ein Schutz geschaffen werden, der ein Herunterfallen einer Person, die sich auf der Trittfläche befindet, auf den Untergrund oder das Schiffsdeck verhindert.

Gemäß einem weiteren Aspekt der Erfindung ist die Bewegungsvorrichtung dazu ausgestaltet ist, sich in dem geöffneten Zustand der Abdeckung in eine im Wesentlichen radiale Richtung des Magnus-Rotors von diesem zur geöffneten Abdeckung oberhalb der Trittfläche zu erstrecken. Hierdurch bilden die heruntergeklappte Abdeckung nach Hinten und bzw. oder die Bewegungsvorrichtung zu den Seiten gemeinsam oder jeweils alleine einen Schutz gegen ein Herunterfallen einer sich auf der Trittfläche aufhaltenden Person. Es wird sozusagen eine Arbeitskanzel ausgebildet, um einer sich auf der Trittfläche aufhaltenden Person Schutz in alle Richtungen gegen ein Herunterfallen zu geben.

Gemäß einem Aspekt der Erfindung wird die Bewegungsvorrichtung mittels einer Arretierungsvorrichtung in dem geschlossenen Zustand der Abdeckung gesichert. Dies ist vorteilhaft, da durch diese Arretierung die Abdeckung gesichert und gegen ein ungewolltes Herunterklappen, d.h. Öffnen, insbesondere bei starkem Seegang eines Schiffes, auf dem der Magnus-Rotor verwendet wird, gesichert werden kann. Ferner kann mittels dieser Arretierung jedes Segment der Abdeckung einzeln geöffnet, d.h. heruntergeklappt werden. Diese Arretierung ist vorteilhafterweise von Außen zugänglich und einfach und schnell ohne Hilfsmittel und Werkzeuge z.B. durch eine Drehung um 90° zu bedienen.

Ausführungsbeispiele und Vorteile der Erfindung werden nachstehend unter Bezugnahme auf folgende Figuren näher erläutert:
- Fig. 1: zeigt eine schematische Darstellung einer perspektivischen Darstellung eines Magnus-Rotors,
- Fig. 2: zeigt eine schematische Darstellung einer vereinfachten Seitenansicht eines Magnus-Rotors,
- Fig. 3: zeigt eine schematische Darstellung einer perspektivischen Darstellung eines Magnus-Rotors,
- Fig. 4: zeigt eine schematische Darstellung einer perspektivischen Darstellung eines Magnus-Rotors,
- Fig. 5: zeigt eine schematische vereinfachte Darstellung von Abdeckungssegmenten der Führungsrollen eines Magnus-Rotors,
- Fig. 6: zeigt eine Darstellung eines Magnus-Rotors, dessen Abdeckungssegmente der Führungsrollen geschlossen sind,
- Fig. 7: zeigt eine Darstellung eines Magnus-Rotors, dessen Abdeckungssegmente der Führungsrollen teilweise geöffnet sind,
- Fig. 8: zeigt eine Darstellung von Führungsrollen eines Magnus-Rotors,
- Fig. 9: zeigt eine Darstellung einer Führungsrolle eines Magnus-Rotors, dessen Abdeckungssegment geöffnet ist, und
- Fig. 10: zeigt eine detaillierte Darstellung eines Magnus-Rotors.

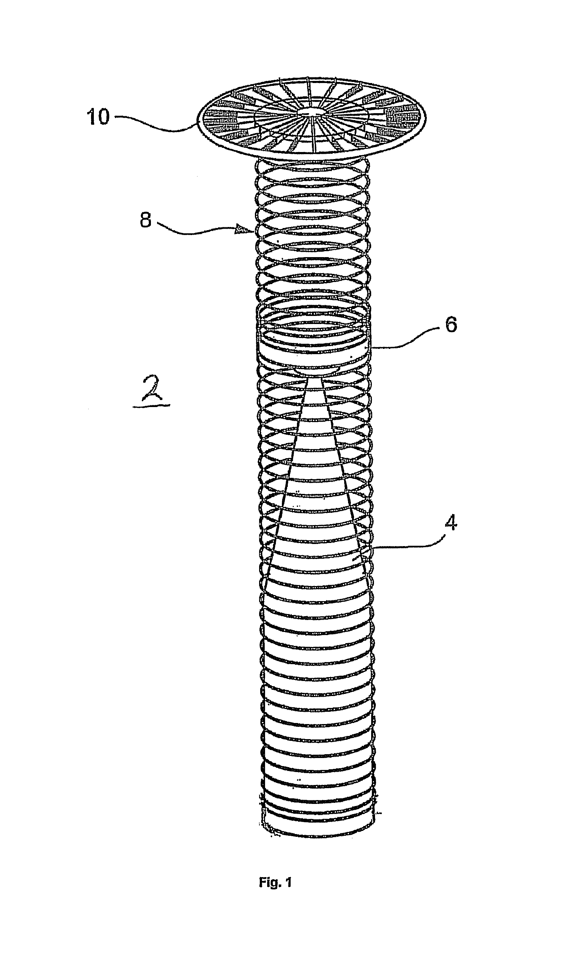

**Fig. 1** zeigt eine schematische Darstellung einer perspektivischen Darstellung eines Magnus-Rotors 2. Der Magnus-Rotor 2 weist einen Rotor 8 auf, der vorzugsweise zylindrisch ausgebildet ist. Am oberen Ende des Rotors 8 ist eine Endplatte 10 angebracht. Soweit der Magnus-Rotor 2 auf einer (nicht dargestellten) Grundplatte wie z. B. einem Schiffsdeck oder Ähnlichem angebracht ist, ist eine entsprechende Endplatte an seinem unteren Ende nicht erforderlich, da diese von der Platte bzw. dem Deck selbst gebildet wird. Der Rotor 8 wird von einem Träger 4 getragen, der im Inneren des Rotors 8 angeordnet ist und auf dem sich der Rotor 8 unter Vermittlung durch eine Lagerung 6 dreht. Diese Lagerung 6 kann ein bekanntes Wälzlager oder jede andere geeignete Ausführung eines Lagers sein.

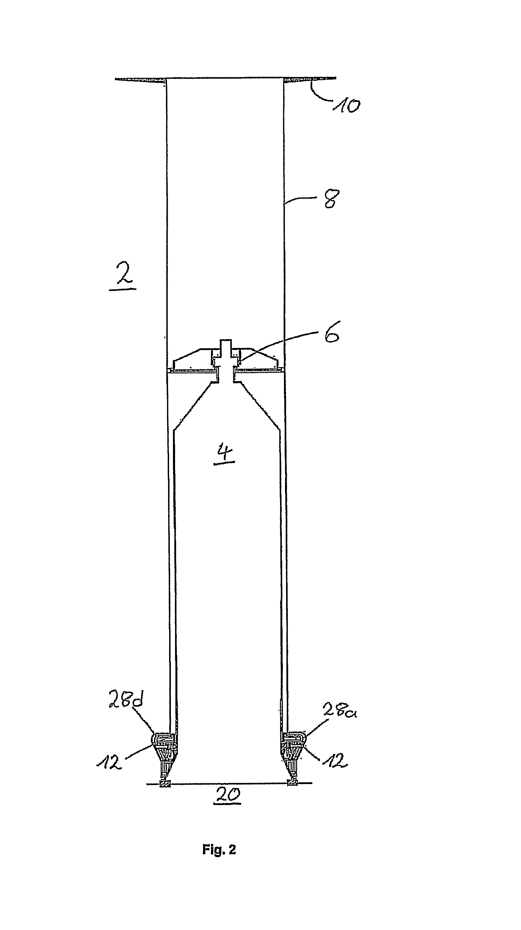

**Fig. 2** zeigt eine schematische Darstellung einer vereinfachten Seitenansicht eines Magnus-Rotors 2 mit dem innenliegenden Träger 4, dem außenliegenden Rotor 8, der Lagerung 6 sowie der Endplatte 10. Der Magnus-Rotor 2 ist auf einem Untergrund 20 befestigt, welcher eine Grundplatte, ein Schiffsdeck oder dergleichen sein kann. Weiterhin sind in dieser **Fig. 2** Führungsrollen 12 sowie Abdeckungen 28a und 28d dargestellt. Die Abdeckungen 28a und 28d decken den unteren Umfangsrand des Rotors 8 und die Führungsrollen 12 ab und verhindern so einerseits, dass Fremdkörper in den Antrieb bzw. die Führungsrollen 12 gelangen und dass sich andererseits Bedienungspersonal an offenliegenden, rotierenden Teilen verletzen kann.

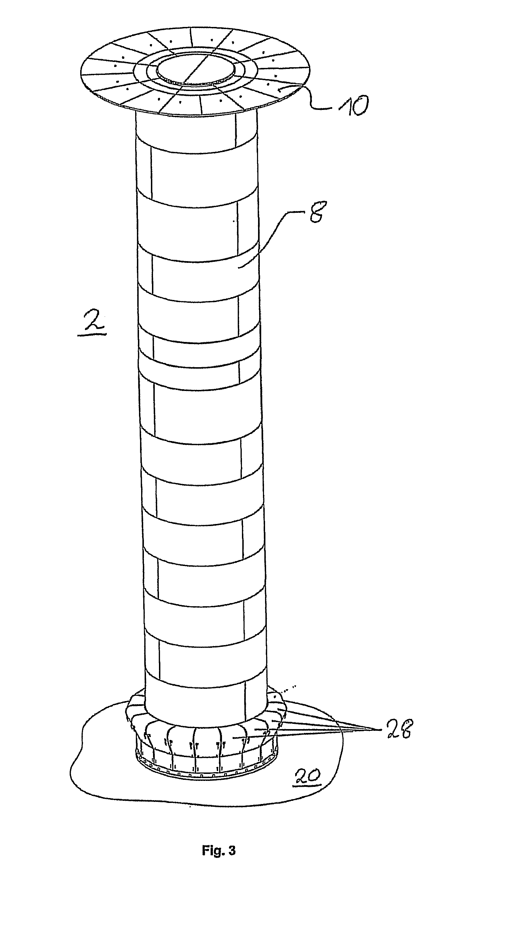

**Fig. 3** zeigt eine schematische Darstellung einer perspektivischen Darstellung eines Magnus-Rotors 2. Dabei ist der Rotor 8 mit einer geschlossenen Oberfläche dargestellt, so dass der Träger 4 nicht dargestellt ist. In dieser Darstellung sind die Abdeckungen 28 in einer geschlossenen Position, d.h. in einer hochgeklappten Position, dargestellt, so dass die Abdeckungen 28 die Führungsrollen 12 abdecken.

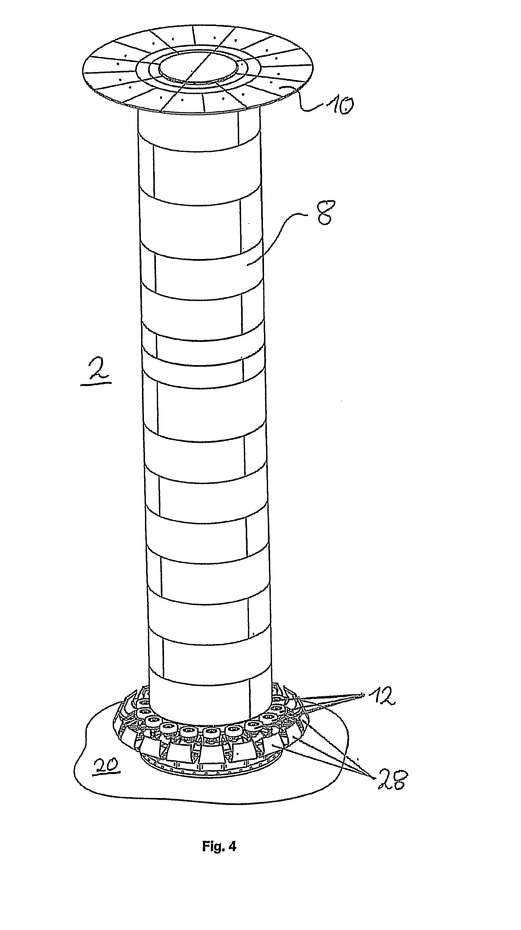

**Fig. 4** zeigt eine schematische Darstellung einer perspektivischen Darstellung eines Magnus-Rotors 2 mit geöffneten, d.h. herunter geklappten Abdeckungen 28, die den Blick auf die darunter befindlichen Führungsrollen 12 freigeben.

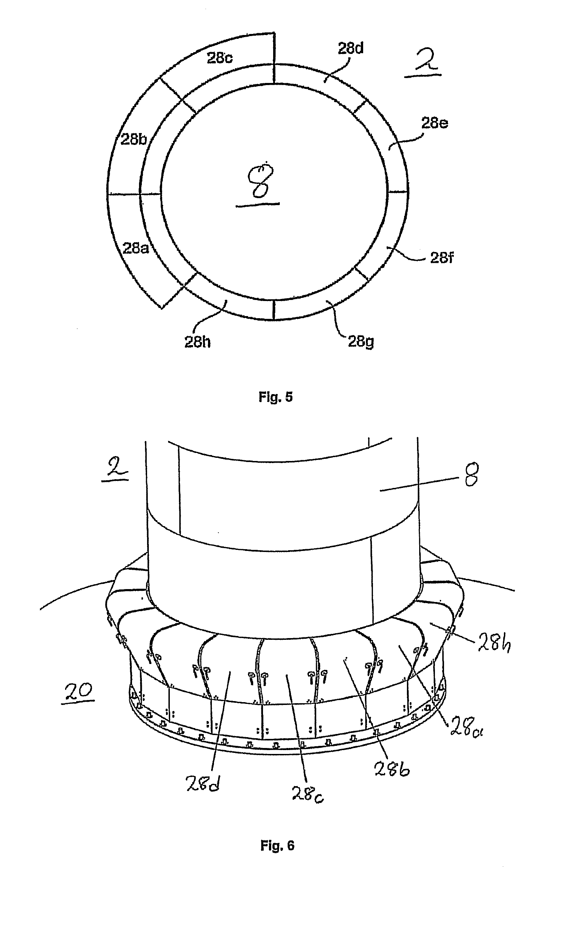

**Fig. 5** zeigt eine schematische vereinfachte Darstellung von Abdeckungssegmenten 28a bis 28h der Führungsrollen 12 eines Magnus-Rotors 2 in einer Draufsicht auf den Rotor 8 ohne die Endplatte 10 und ohne die Darstellung des Trägers 4 sowie der Lagerung 6. Um den Außenumfang des Rotors 8 herum sind Abdeckungen 28a bis 28h angeordnet. Dabei sind die Abdeckungen 28a, 28b und 28c Abdeckungen, unter denen die Führungsrollen 12 angeordnet sind, während die Abdeckungen 28d bis 28h die Führungsrollen 12 abdecken. Durch die Segmentierung muss nicht jedes Mal die gesamte Abdeckung entfernt werden, um Zugang zu einzelnen Teilen des Antriebs- und Führungssystems zu erhalten.

**Fig. 6** zeigt eine Darstellung eines Magnus-Rotors 2, dessen Abdeckungssegmente 28a bis 28h der Führungsrollen 12 geschlossen sind. Dabei ist der untere Bereich eines Magnus-Rotors 8 gezeigt, der auf einem Untergrund 20 wie dem Deck eines Schiffes befestigt ist.

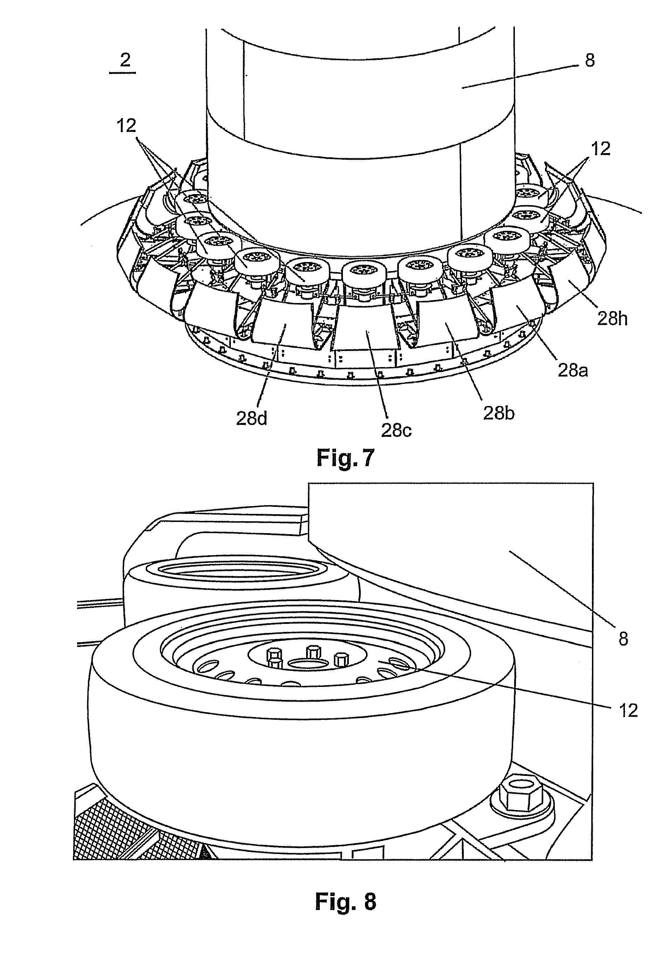

**Fig. 7** zeigt eine Darstellung eines Magnus-Rotors 2, dessen Abdeckungssegmente 28a bis 28h der Führungsrollen teilweise geöffnet sind. Dabei sind die Abdeckungssegmente 28a bis 28c geöffnet, d.h. in Richtung des Untergrunds 20 wie einem Schiffsdeck heruntergeklappt. Zu erkennen sind die Führungsrollen 12, von denen jeweils eine Führungsrolle 12 unter einem der Abdeckungssegmente 28a bis 28h abgedeckt werden kann.

**Fig. 8** zeigt eine Darstellung von Führungsrollen 12 eines Magnus-Rotors 2. Als Führungsrollen 12 können Reifen von Kraftfahrzeugen verwendet werden. Hierbei sind zur Reduzierung der Geräuschentwicklung bei laufendem Rotor 8 profillose Reifen zu verwenden. Die Führungsrollen 12 sind auf einer Rotationsachse montiert, die parallel zur Rotationsachse des Magnus-Rotors 2 ausgerichtet ist. Sie sind am unteren Umfangsrand des Rotors 8 vorgesehen. Die Führungsrollen 12 sind über den gesamten Umfang des Rotors 8 verteilt und liegen spielfrei daran an. Selbst wenn sich also z. B. durch eine Windböe und die relativ hoch angeordnete Lagerung (vergl. z. B. **Fig. 2**) ein Kippmoment ergeben sollte, kann dies nicht zu einer Schlagbewegung des Rotors 8 führen, da die Führungsrollen 12 dieses sicher verhindern. Dadurch ist sichergestellt, dass der Rotor 8 stets eine präzise Rotation ausführt.

Ein wesentlicher Vorteil dieses Führungssystems liegt in seiner guten Zugänglichkeit und in seinem einfachen Aufbau. Dabei entspricht der Aufbau der Führungsrollen 12 durch die Verwendung von Kraftfahrzeugreifen dem Aufbau einer Radaufhängung bei einem Kraftfahrzeug. Daher ist die Art der Montage der Führungsrollen 12 geläufig und bekannt, weshalb ein Austausch der Führungsrollen 12 sehr einfach und ohne hierfür spezielle Schulungen oder Werkzeuge zu benötigen erfolgen kann, da lediglich das gleiche Werkzeug wie bei einem Reifenwechsel eines Kraftfahrzeugs erforderlich ist.

Ferner ist es vorteilhaft, dass sich die Führungsrollen 12 außerhalb des Rotors 8 befinden. So befinden sich am Rotor 8 keinerlei Teile, die verschleißen oder beschädigt werden können. Auch der Austausch von Führungsrollen 12 ist problemlos möglich, da die Führungsrollen 12 von außen zugänglich sind. Die Wartung wird ebenfalls erleichtert, weil eine Sichtkontrolle sogar im laufenden Betrieb durchgeführt werden kann, da das Innere des Magnus-Rotors 2 nicht betreten werden muss. Dadurch können Störungen mit geringem Aufwand behoben werden.

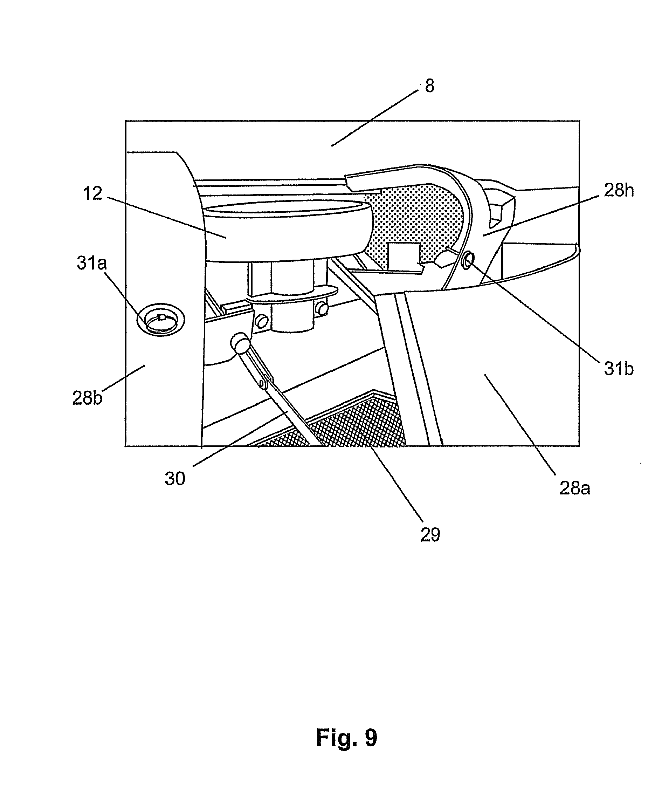

**Fig. 9** zeigt eine Darstellung einer Führungsrolle 12 eines Magnus-Rotors 2, dessen Abdeckungssegment 28a geöffnet ist. Die benachbarten Abdeckungssegmente 28b und 28h sind geschlossen. Das Abdeckungssegment 28a ist dabei so weit heruntergeklappt, dass eine Trittfläche 29, die sich unterhalb der Führungsrolle 12 befindet, sichtbar ist. Diese Trittfläche 29 ist unterhalb der Führungsrolle 12 vorgesehen und wird ebenfalls durch das Abdeckungssegment 28a abgedeckt, wenn dieses über die Führungsrolle 12 hochgeklappt und geschlossen wird. Zum Hoch- und Herunterklappen des Abdeckungssegments 28a sind Bügel 30 an beiden Seiten des Abdecksegments 28a vorgesehen. Das Abdeckungssegment 28a wird mittels zweier Hebel 31a und 31b in dem hochgeklappten Zustand gesichert.

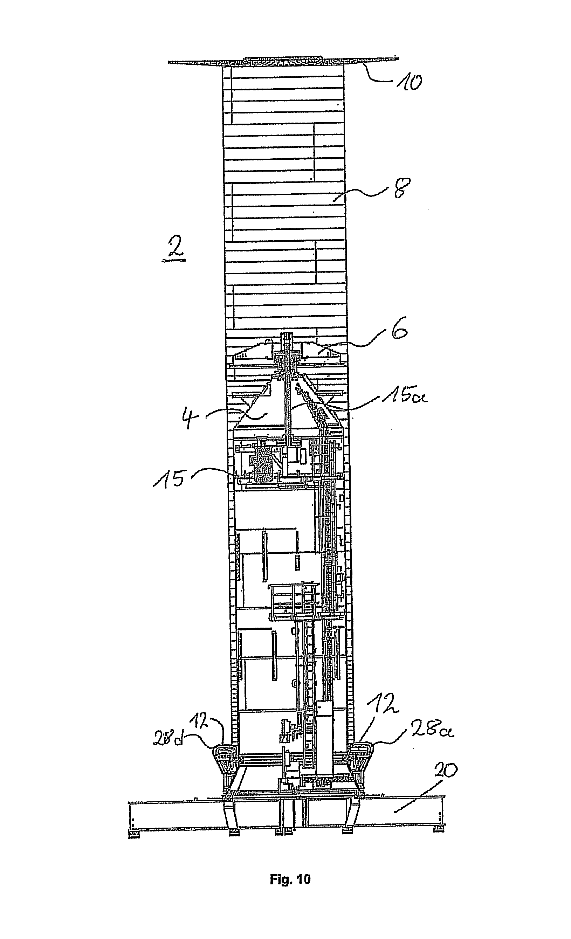

**Fig. 10** zeigt eine detaillierte Darstellung eines Magnus-Rotors 2. In dieser Darstellung ist der Rotor 8 mit Endplatte 10 gezeigt. Der Rotor 8 des Magnus-Rotors 2 liegt mit der Lagerung 6 auf dem innenliegenden Träger 4 auf. Im unteren Bereich des Rotors 8 sind die Führungsrollen 12 und deren Abdeckungen 28, hier die Abdeckungssegmente 28a und 28d, dargestellt. Des Weiteren ist im Inneren des Trägers 4 ein Antrieb 15 angeordnet, der mittels einer Antriebswelle 15a, die durch die Lagerung 6 vom Träger 4 in den Rotor 8 geführt wird, den Rotor 8 antreibt. Dabei besitzen der Rotor 8 und die Antriebswelle 15a die gleiche Rotationsachse.

Ein wesentlicher Vorteil der erfindungsgemäßen Abdeckung 28 für die Führungsrollen 12 ist zum einen, dass sich die einzelnen Abdeckungssegmente 28a bis 28h unabhängig voneinander schließen und öffnen, d.h. hoch- und herunterklappen lassen. So können einzelne Führungsrollen 12 gewartet oder ausgetauscht werden, ohne dabei die gesamte Abdeckung 28 entfernen und wieder montieren zu müssen.

Ferner ermöglicht es die Trittfläche 29, dass eine Wartung oder ein Austausch einer Führungsrolle 12 von einer sicheren Arbeitsposition für das Personal ausgeführt werden kann. So ist die Trittfläche 29 als Bestandteil des unteren Bereichs des Magnus-Rotors 2 ausgebildet oder fest an diesem montiert. Hierdurch kann die Trittfläche, auch bei starken Schiffsbewegungen, keine Relativbewegung gegenüber dem Magnus-Rotor 2 und den Führungsrollen 12 erfahren, durch die das an der Führungsrolle 12 arbeitende und auf der Trittfläche 29 stehende Personal gefährdet werden könnte. Auf diese Weise wird die Notwendigkeit vermieden, dass sich das Personal für Wartungs- oder Austauscharbeiten über eine Leiter oder Arbeitsbühnen Zugang zu der entsprechenden Führungsrolle 12 verschaffen muss, die stets eine Gefahrenquelle für das Personal darstellen, gerade auf einem feuchten und damit rutschigen Decksboden eines Schiffes.

Durch die Bügel 30 lässt sich das Abdeckungssegment 28a einfach und platzsparend bedienen, d.h. hoch- und herunterklappen. Ferner sind die Bügel erfindungsgemäß derart vorgesehen, dass sie das Abdeckungssegment 28a in einer so weit heruntergeklappten Position halten, dass das Abdeckungssegment 28a auf einer Höhe gehalten wird, dass das Abdeckungssegment 28a in radialer Richtung, d.h. hinter einer sich auf der Trittfläche 29 aufhaltenden Person, eine Brüstung bildet, d.h. einen Schutz gegen ein Herunterfallen von der Trittfläche nach Hinten. Dabei dienen die Bügel 30 als seitlicher Schutz gegen ein Herunterfallen. Auf diese Weise bietet das heruntergeklappte Abdeckungssegment 28a und die Bügel 30 dem auf der Trittfläche 29 befindlichen Personal z.B. bei Arbeiten an der Führungsrolle einen geschützten Bereich, in dem die Arbeiten relativ sicher durchgeführt werden können, d.h. das Personal zumindest zur Seite und nach Hinten gegen ein Herunterfallen geschützt ist. Dies ist besonders vorteilhaft bei der Verwendung eines Magnus-Rotors 2 auf einem Schiff, da ein Herunterfallen dann leicht in einem Über-Bord-Fallen enden kann.

Die Verwendung zweier Hebel 31 a und 31b ist vorteilhaft, um das Abdeckungssegment 28a auf beiden Seiten zu sichern und damit die Belastung gleichmäßig auf beide Seiten des Abdeckungssegments 28a zu verteilen. Durch die Hebel 31 a und 31 b, die von Außen des Abdeckungssegments 28a zugänglich sind, lässt sich das Abdeckungssegment 28a einfach zugänglich, schnell und von einer Person ohne Werkzeug oder Hilfsmittel bedienen. Dabei können die Hebel 31 a und 31b so vorgesehen sein, dass sie sich durch eine 90°-Drehung um ihre Rotationsachse senkrecht zur Außenfläche des Abdeckungssegments 28a in diesem Bereich zum Lösen und Schließen ihrer Arretierung drehen lassen.

## Patentansprüche

1. Magnus-Rotor (2), mit
einem Träger (4), welcher im Inneren des Magnus-Rotors (2) angeordnet ist, einem Rotor (8), welcher im Betrieb des Magnus-Rotors (2) um den Träger (4) rotiert,
einer Lagerung (6), welche den Rotor (8) auf dem Träger (4) trägt,
einer am unteren Außenumfang des Rotors (8) angeordneten Führungsrolle (12), welche spielfrei am Rotor (8) anliegt,
**gekennzeichnet durch**
eine Trittfläche (29), welche unterhalb der Führungsrolle (12) angeordnet ist, und eine Abdeckung (28a-28h), welche die Führungsrolle (12) und die Trittfläche (29) abdeckt,
wobei die Abdeckung (28a-28h) in einem geöffneten Zustand die Führungsrolle (12) und die Trittfläche (29) so freigibt, dass eine Person auf der Trittfläche (29) Arbeiten an der Führungsrolle (12) durchführen kann,
wobei die Abdeckung (28a-28h) eine Bewegungsvorrichtung (30) aufweist, die dazu ausgestaltet ist, die Abdeckung (28a-28h) in dem geöffneten Zustand in einer vertikalen Höhe oberhalb der Trittfläche (29) zu halten.

2. Magnus-Rotor (2) nach Anspruch 1,
wobei die Trittfläche (29) als Teil einer Grundplatte oder eines Schiffsdecks oder dergleichen ausgebildet ist, auf der der Magnus-Rotor (2) befestigt ist.

3. Magnus-Rotor (2) nach Anspruch 1 oder 2,
wobei die Trittfläche (29) mit einer Oberfläche versehen oder die Oberfläche beschichtet ist, um ein Rutschen auf der Trittfläche (29) zu verhindern.

4. Magnus-Rotor (2) nach einem der vorherigen Ansprüche,
wobei die Bewegungsvorrichtung (30) dazu ausgestaltet ist, sich in dem geöffneten Zustand der Abdeckung (28a-28h) in eine im Wesentlichen radiale Richtung des Magnus-Rotors (2) von diesem zur geöffneten Abdeckung (28a-28h) oberhalb des Trittfläche (29) zu erstrecken.

5. Magnus-Rotor (2) nach einem der vorherigen Ansprüche,
wobei die Bewegungsvorrichtung (30) mittels einer Arretierungsvorrichtung (31a, 31 b) in dem geschlossenen Zustand der Abdeckung (28a-28h) gesichert wird.

6. Schiff, insbesondere Frachtschiff, mit wenigstens einem Magnus-Rotor (2) nach einem der vorherigen Ansprüche.

## Claims

1. Magnus rotor (2), having
a carrier (4) which is arranged inside the Magnus rotor (2),
a rotor (8) which rotates about the carrier (4) during operation of the Magnus rotor (2),
a bearing (6) which carries the rotor (8) on the carrier (4), a guiding roller (12) which is arranged on the lower outer periphery of the rotor (8) and which is in abutment with the rotor (8) in a play-free manner,
**characterised by**
a tread surface (29) which is arranged below the guiding roller (12) and
a cover (28a-28h) which covers the guiding roller (12) and the tread surface (29),
wherein the cover (28a-28h) in an open state releases the guiding roller (12) and the tread surface (29) in such a manner that a person on the tread surface (29) can carry out work on the guiding roller (12),
wherein the cover (28a-28h) has a movement device (30) which is configured to retain the cover (28a-28h) in the open state at a vertical height above the tread surface (29).

2. Magnus rotor (2) according to claim 1,
wherein the tread surface (29) is constructed as a portion of a base plate or a ship deck or the like, on which the Magnus rotor (2) is secured.

3. Magnus rotor (2) according to claim 1 or claim 2,
wherein the tread surface (29) is provided with a surface or the surface is coated in order to prevent slipping on the tread surface (29).

4. Magnus rotor (2) according to any one of the preceding claims,
wherein the movement device (30) is configured in the open state of the cover (28a-28h) to extend in a substantially radial direction of the Magnus rotor (2) from the rotor to the open cover (28a-28h) above the tread surface (29).

5. Magnus rotor (2) according to any one of the preceding claims,
wherein the movement device (30) is secured by means of a securing device (31a, 31b) in the closed state of the cover (28a-28h).

6. Ship, in particular freight ship, having at least one Magnus rotor (2) according to any one of the preceding claims.

## Revendications

1. Rotor à effet Magnus (2), comprenant
un support (4), qui est disposé à l'intérieur du rotor à effet Magnus (2),
un rotor (8), qui tourne autour du support (4) lorsque le rotor à effet Magnus (2) fonctionne,
un palier (6), qui supporte le rotor (8) sur le support (4),
un cylindre de guidage (12) disposé au niveau de la périphérie extérieure inférieure du rotor (8), lequel repose sans jeu au niveau du rotor (8),
**caractérisé par**
une surface de marche (29), qui est disposée sous le cylindre de guidage (12), et
un système de recouvrement (28a - 28h), qui recouvre le cylindre de guidage (12) et la surface de marche (29),
sachant que le système de recouvrement (28a - 28h) dégage, à l'état ouvert, le cylindre de guidage (12) et la surface de marche (29) de sorte qu'une personne puisse exécuter, sur la surface de marche (29), des travaux sur le cylindre de guidage (12),
sachant que le système de recouvrement (28a - 28h) présente un dispositif de déplacement (30) qui est configuré pour maintenir le système de recouvrement (28a - 28h) dans l'état ouvert à une hauteur verticale au-dessus de la surface de marche (29).

2. Rotor à effet Magnus (2) selon la revendication 1,
sachant que la surface de marche (29) est réalisée en tant que partie d'un panneau de base ou d'un pont de bateau ou similaire, sur lequel le rotor à effet Magnus (2) est fixé.

3. Rotor à effet Magnus (2) selon la revendication 1 ou 2,
sachant que la surface de marche (29) est pourvue d'une surface ou que la surface est pourvue d'un revêtement afin d'empêcher les chutes par glissade sur la surface de marche (29).

4. Rotor à effet Magnus (2) selon l'une quelconque des revendications précédentes,
sachant que le dispositif de déplacement (30) est configuré pour s'étendre, dans l'état ouvert du système de recouvrement (28a - 28h), dans une direction essentiellement radiale du rotor à effet Magnus (2), en partant de ce dernier en direction du système de recouvrement (28a - 28h) ouvert au-dessus de la surface de marche (29).

5. Rotor à effet Magnus (2) selon l'une quelconque des revendications précédentes,
sachant que le dispositif de déplacement (30) est bloqué au moyen d'un dispositif d'arrêt (31a, 31b) dans l'état fermé du système de recouvrement (28a - 28h).

6. Navire, en particulier navire cargo, comprenant au moins un rotor à effet Magnus (2) selon l'une quelconque des revendications précédentes.
